# FASCICULE DE BREVET EUROPEEN

(11) **EP 4 089 557 B1**
(45) Date de publication et mention de la délivrance du brevet: **17.07.2024**
(21) Numéro de dépôt: 22168524.1
(22) Date de dépôt: 14.04.2022
(51) Int. Cl.: G06F 21/54, G06F 21/75

(54) **PROCÉDÉ D'EXÉCUTION D'UN CODE BINAIRE PAR UN MICROPROCESSEUR**
VERFAHREN ZUR AUSFÜHRUNG EINES BINÄREN CODES DURCH EINEN MIKROPROZESSOR
METHOD FOR EXECUTING A BINARY CODE BY A MICROPROCESSOR

(30) Priorité: 10.05.2021 FR 2104897
(43) Date de publication de la demande: 16.11.2022
(73) Titulaire: Commissariat à l'énergie atomique et aux énergies alternatives, 75015 Paris (FR)
(72) Inventeur: LEPLUS, Gaetan, 38054 GRENOBLE CEDEX 09 (FR); SAVRY, Olivier, 38054 GRENOBLE Cedex 9 (FR)
(74) Mandataire: INNOV-GROUP

(56) Documents cités:
- EP-A1- 3 736 719
- DE MEYER LAUREN ET AL: "M&M: Masks and Macs against Physical Attacks", 9 November 2018 (2018-11-09), XP055864293, Retrieved from the Internet <URL:https://tches.iacr.org/index.php/TCHES/article/view/7333/6505> [retrieved on 20211122], DOI: 10.13154/tches.v2019.i1.25-50
- PANTEA KIAEI ET AL: "SKIVA: Flexible and Modular Side-channel and Fault Countermeasures", vol. 20190702:141841, 2 July 2019 (2019-07-02), pages 1 - 38, XP061032943, Retrieved from the Internet <URL:http://eprint.iacr.org/2019/756.pdf> [retrieved on 20190626]

## Description

L'invention concerne un procédé d'exécution d'un code binaire par un microprocesseur. L'invention concerne également un module matériel de sécurisation pour la mise en oeuvre de ce procédé d'exécution.

Pour obtenir des informations sur un code binaire ou provoquer un fonctionnement inattendu du code binaire, de nombreuses attaques sont possibles. Par exemple, des attaques connues sous le terme d'« injection de fautes » ou « fault attack » en anglais peuvent être mises en oeuvre. Ces attaques consistent à perturber le fonctionnement du microprocesseur ou de la mémoire contenant le code binaire, par divers moyens physiques comme des modifications des tensions d'alimentation, des modifications du signal d'horloge, l'exposition du microprocesseur à des ondes électromagnétiques et autres.

À l'aide de telles attaques, un attaquant peut altérer l'intégrité des instructions machines ou des données pour, par exemple, retrouver une clé secrète d'un système cryptographique, contourner des mécanismes de sécurité tels que la vérification d'un code PIN lors d'une authentification ou simplement empêcher l'exécution d'une fonction essentielle pour la sécurité d'un système critique.

Ces attaques peuvent provoquer notamment trois types de fautes, dites fautes d'exécution, lors de l'exécution du code binaire :
1) une altération des instructions du code machine exécuté,
2) une altération des données stockées dans la mémoire principale ou dans des registres du microprocesseur, et
3) une altération du flot de contrôle du code machine.

Le flot de contrôle correspond au chemin d'exécution suivi lors de l'exécution du code machine. Le flot de contrôle est classiquement représenté sous la forme d'un graphe connu sous le terme de graphe de flot de contrôle ou « control flow graph » en anglais.

Pour détecter de telles fautes d'exécution, il a déjà été proposé d'associer un code correcteur d'erreur à chaque donnée traitée par le microprocesseur. Ensuite, le code correcteur d'erreur associé au résultat de l'instruction qui traite ces données est calculé à partir des codes correcteurs d'erreur des données traitées. Ainsi, si une faute se produit lors de l'exécution de cette instruction, le résultat obtenu ne correspond pas au code correcteur d'erreur calculé. Cela permet de détecter cette faute. Une telle solution est par exemple divulguée dans la demande FR3071082. L'algorithme pour construire le code correcteur d'erreur associé à une donnée est connu. Il est donc possible pour un attaquant d'injecter des fautes de manière à modifier le code correcteur d'erreur calculé pour le résultat de manière à ce qu'il corresponde au résultat fauté. Dans ce cas, la faute d'exécution n'est pas détectée.

Pour pallier à l'inconvénient ci-dessus, il a été proposé de remplacer le code correcteur d'erreur par un code d'intégrité. Ce code d'intégrité est construit à partir de la donnée et, en plus, à l'aide d'une clé secrète connue seulement du microprocesseur. Ainsi, il est difficile pour un attaquant de modifier un code d'intégrité pour qu'il corresponde à un résultat fauté puisqu'il ne connaît pas la clé secrète. Il faut cependant qu'il soit toujours possible de construire le code d'intégrité du résultat en utilisant les codes d'intégrité associés aux données traitées et sans utiliser le résultat de l'instruction exécutée par l'unité arithmétique et logique. Par exemple, une telle solution est décrite dans l'article suivant : L. De Meyer, V. Arribas, S. Nikova, V. Nikov et V. Rijmen : "M&M : Masks and Macs against physical attacks", IACR Transactions on Cryptographie Hardware and Embedded Systems, page 25-50, 2019. Cet article est par la suite désigné par le terme "DEMEYER2019". Le procédé décrit dans cet article pour calculer le code d'intégrité du résultat à partir des codes d'intégrités des données traitées est complexe. En effet, pour cela il fait intervenir des multiplications dans un champ de Galois. Il est donc difficile à implémenter dans un microprocesseur y compris dans le cas des opérations booléennes.

De l'état de la technique est également connu de EP3736719A1 et de l'article suivant : PANTEA KIAEI et AL : "SKIVA : Flexible and Modular Side-chanel and Fault Contermeasures", IACR, 2/07/2019, pages 1-38. La demande EP3736719A1 ne décrit aucune méthode de sécurisation contre les attaques par injection de fautes. L'article de PANTEA KIAEI et Al décrit des méthodes de sécurisation contre les attaques par injection de fautes en utilisant de la redondance spatiale et de la redondance temporelle.

L'objectif est de proposer un procédé d'exécution d'un code binaire qui présente le même niveau de sécurité, dans le cas des opérations booléennes, que celui décrit dans l'article de DEMEYER2019 mais qui soit plus simple à implémenter.

L'invention a donc pour objet un tel procédé d'exécution d'un code binaire conforme à la revendication 1.

L'invention a également pour objet module matériel de sécurisation pour la mise en oeuvre du procédé revendiqué, conforme à la revendication 10.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un appareil électronique apte à exécuter un code binaire;
- la figure 2 est une illustration schématique de la structure d'un registre de l'appareil de la figure 1,
- les figures 3 à 5 sont des illustrations schématiques de différentes implémentations possibles d'une fonction F_{α} exécutée par l'appareil de la figure 1 ;
- la figure 6 est un organigramme d'un procédé d'exécution du code binaire par l'appareil de la figure 1.

### CHAPITRE I : Conventions, notations et définitions :

Dans les figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique, n'étant pas directement exécutable par un microprocesseur et étant destiné à être transformé par un compilateur en un code machine directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

On parle d'exécution d'une fonction pour désigner l'exécution des instructions réalisant cette fonction.

Un bloc de bits d'une donnée ou d'une variable est un groupe de bits consécutifs de cette donnée ou de cette variable.

La taille d'un bloc de bits est égale au nombre de bits contenus dans ce bloc.

Les notations suivantes sont utilisées pour désigner des opérations booléennes :
- l'opération logique « OU » est désignée par le symbole "+",
- l'opération logique « OU EXCLUSIF» est désignée par le symbole "XOR",
- l'opération logique « ET » est désignée par le symbole ".",
- l'opération booléenne "NON" est désignée par le symbole " ' " situé après la variable dont le complément est calculé.

### CHAPITRE II : Architecture de l'appareil :

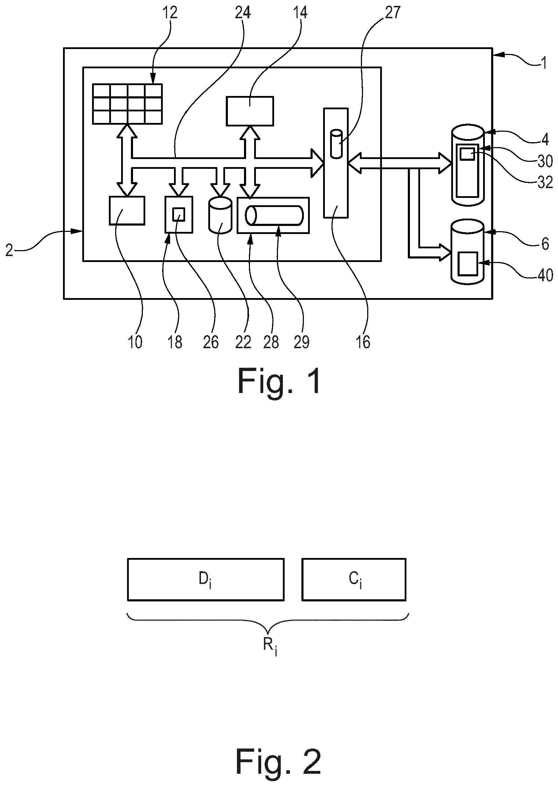

La figure 1 représente un appareil électronique 1 comportant un microprocesseur 2, une mémoire principale 4 et un support 6 de stockage de masse. Par exemple, l'appareil 1 est un ordinateur, un smartphone, une tablette électronique, une carte à puce ou similaire.

Le microprocesseur 2 comporte ici :
- une unité arithmétique et logique 10 ;
- un ensemble 12 de registres ;
- un module de commande 14 ;
- une interface 16 d'entrée/sortie de données,
- un chargeur 18 d'instructions comportant un compteur ordinal 26,
- une file 22 d'instructions à exécuter, et
- un module matériel 28 de sécurisation.

La mémoire 4 est configurée pour stocker des instructions d'un code binaire 30 d'un programme devant être exécuté par le microprocesseur 2. La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est réalisée sur un substrat mécaniquement séparé du substrat sur lequel sont réalisés les différents éléments du microprocesseur 2 comme l'unité 10.

A titre d'illustration, le code binaire 30 comporte notamment un code machine 32 d'une fonction sécurisée. Chaque fonction sécurisée correspond à un ensemble de plusieurs lignes de code, par exemple plusieurs centaines ou milliers de lignes de code, enregistrées à des adresses successives dans la mémoire 4. Ici, chaque ligne de code correspond à un mot-machine. Ainsi, une ligne de code est chargée dans un registre du microprocesseur 2 en une seule opération de lecture. De même, une ligne de code est écrite dans la mémoire 4 par le microprocesseur 2 en une seule opération d'écriture. Chaque ligne de code code soit une seule instruction soit une seule donnée.

A titre d'illustration, le microprocesseur 2 est conforme à l'architecture RISC (« Reduced Instructions Set Computer »).

Le chargeur 18 charge dans la file 22 la prochaine instruction à exécuter par l'unité 10 à partir de la mémoire 4. Plus précisément, le chargeur 18 charge l'instruction sur laquelle pointe le compteur ordinal 26. A cet effet, la file 22 comprend une succession de plusieurs registres.

L'unité 10 est notamment configurée pour exécuter les unes après les autres les instructions chargées dans la file 22. Les instructions chargées dans la file 22 sont généralement systématiquement exécutées dans l'ordre où ces instructions ont été enregistrées dans cette file 22. L'unité 10 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 10 ».

Le module 14 est configuré pour déplacer des données entre l'ensemble 12 de registres et l'interface 16. L'interface 16 est notamment apte à acquérir des données et des instructions, par exemple, depuis la mémoire 4 et/ou le support 6 extérieurs au microprocesseur 2. Ici, pour accélérer les transferts de données et d'instructions entre le microprocesseur 2 et la mémoire 4, l'interface 16 comporte une ou plusieurs mémoires caches. Pour simplifier la figure 1, seule une mémoire cache 27 est représentée. Cette mémoire cache 27 est utilisée pour stocker temporairement les données traitées par le microprocesseur 2 sur la même puce que l'unité 10.

Le module 28 est capable d'exécuter automatiquement les différentes opérations décrites en détails dans les chapitres suivants pour sécuriser l'exécution des opérations booléenne par l'unité 10. Le module 28 fonctionne indépendamment et sans utiliser l'unité 10. Ainsi, il est capable de traiter les lignes de code avant et/ou après que celles-ci soient traitées par l'unité 10. A cet effet, il comporte notamment une mémoire non-volatile sécurisée 29. Aucun accès à cette mémoire 29 sans passer par l'intermédiaire du module 28 n'est prévu. Dans ce mode de réalisation, le module 28 est configuré pour exécuter des opérations telles que les opérations suivantes :
- vérifier un code d'intégrité,
- construire un code d'intégrité à partir d'une donnée,
- construire le code d'intégrité d'un résultat à partir codes d'intégrités des données traitées.

La mémoire 29 est utilisée pour stocker les informations secrètes nécessaires au fonctionnement du module 28. Ici, elle comporte donc notamment une clé secrète α pré-enregistrée.

Dans cet exemple de réalisation, l'ensemble 12 comporte des registres généraux utilisables pour stocker tout type de données. La taille de chacun de ces registres est suffisante pour y stocker une donnée ou un résultat et le code d'intégrité qui lui est associé.

Un bus d'échange de données 24 qui relie les différents composants du microprocesseur 2 entre eux est représenté sur la figure 1 pour indiquer que les différents composants du microprocesseur peuvent échanger des données entre eux.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

### CHAPITRE III - SÉCURISATION DES OPERATIONS BOOLEENNES :

Dans ce chapitre, par « instruction logique », on désigne une instruction du jeu d'instructions du microprocesseur 2 qui, lorsqu'elle est exécutée par l'unité 10, enregistre dans un registre Rᵣₑₛ₋ₚ du microprocesseur le résultat d'une opération booléenne.

Les registres dans lesquels sont enregistrées la ou les données à traiter sont typiquement identifiés par un ou plusieurs opérandes de l'instruction logique. De même, le registre Rᵣₑₛ₋ₚ dans lequel le résultat Dᵣₑₛ₋ₚ de l'instruction logique doit être enregistré peut aussi être identifié par un opérande de cette instruction logique.

L'opcode de l'instruction logique identifie l'opération booléenne à exécuter par l'unité 10 pour modifier ou combiner la ou les données D₁ à Dₙ.

Par la suite, le symbole "&" est utilisé pour désigner de façon générique une opération booléenne. Ainsi, la notation D₁&D₂&...&Dₙ désigne de façon générique une opération booléenne exécutée par le microprocesseur 2 entre les données D₁ à Dₙ.

Dans le cas où n = 1, l'opération booléenne est l'opération complément également connue sous le nom d'opération booléenne "NON". Dans le cas où n est supérieur ou égal à deux, l'opération booléenne est choisie dans le groupe constitué des opérations booléennes suivantes et de leur composition :
- l'opération logique « OU »,
- l'opération logique « OU EXCLUSIF»,
- l'opération logique « ET ».

En injectant des fautes lors du fonctionnement de l'unité 10, il est possible de perturber son fonctionnement de sorte que le résultat de l'exécution de l'instruction logique ne correspond pas à celui attendu. On dit alors qu'on a provoqué un dysfonctionnement de l'unité 10.

Ce chapitre décrit une solution pour détecter un tel dysfonctionnement de l'unité 10. Ici, cette solution est décrite dans un cas simplifié où elle est implémentée seulement pour les opérations booléennes. La sécurisation de l'exécution des autres opérations arithmétiques n'est pas mis en oeuvre dans ce mode de réalisation.

Les registres R₁ à Rₙ et le registre Rᵣₑₛ₋ₚ sont, par exemple, des registres de l'ensemble 12 du microprocesseur 2.

La taille, en nombre de bits, de chaque donnée D₁, D₂ et Dᵣₑₛ₋ₚ est égale à 2^{d}, où d est un nombre entier typiquement supérieur à quatre ou cinq. Par exemple, ici, d = 5.

Les structures des registres R₁, R₂ et Rᵣₑₛ₋ₚ sont identiques et représentées dans le cas particulier du registre Rᵢ sur la figure 2. Le registre Rᵢ comporte :
- une plage de 32 bits contenant la donnée D;,
- une plage contenant un code Cᵢ d'intégrité permettant de vérifier l'intégrité et l'authenticité de la donnée Dᵢ.

Le code Cᵢ est généré par le module 28 à l'aide d'une relation préprogrammée définie de façon générique par la relation suivante : Cᵢ = Q_{α}(Dᵢ), où :
- l'indice i identifie un registre parmi les registres R₁, R₂ et Rᵣₑₛ₋ₚ, et
- la fonction Q_{α} est une fonction préprogrammée dans le module 28 et paramétrée par la clé secrète α.

La fonction Q_{α} est définie par la relation suivante : Q_{α}(Dᵢ) = P o F_{α}(Dᵢ), où le symbole "o" désigne l'opération de composition de fonctions. La fonction P est une fonction prédéterminée. Dans les premiers modes de réalisation décrits ci-dessous, la fonction P est la fonction identité. Ainsi, dans ces premiers modes de réalisation, la fonction Q_{α} est égale à la fonction F_{α}. Des exemples où la fonction P est différentes de la fonction identité sont donnés dans le chapitre traitant des variantes.

La fonction F_{α} est un homomorphisme d'un ensemble A muni de l'opération booléenne "&" vers un ensemble B muni de la même opération booléenne "&" telle que F_{α}(D₁&D₂) = F_{α}(D₁) & F_{α}(D₂) et cela pour toutes les opérations booléennes "&". Ici, les ensembles A et B sont chacun l'ensemble des nombres codables sur 32 bits, c'est-à-dire l'ensemble des données D₁ et D₂ possibles. Ainsi, en utilisant les notations précédemment introduites, la fonction F_{α} est telle que pour toute opération booléenne &, il est possible de calculer simplement le code d'intégrité Cᵣₑₛ₋ₜ associé au résultat Dᵣₑₛ₋ₚ de l'opération booléenne D₁ & D₂ à l'aide de la relation suivante Cᵣₑₛ₋ₜ = C₁ & C₂. Lorsque l'opération booléenne exécutée est l'opération complément de la donnée D₁, il est aussi possible de calculer le code Cᵣₑₛₜ₋ₜ associé au résultat Dᵣₑₛ₋ₚ à l'aide de la relation suivante Cᵣₑₛ₋ₜ = C₁', où le symbole " ' " désigne l'opération complément qui retourne un "1" quand D₁ = 0 et qui retourne "0" quand D₁ = 1.

La fonction F_{α} est définie par la relation générique suivante : F_{α}(Dᵢ) = T_{αt} o...o T_{αr} o ... o T_{α1} o T_{α0}(Dᵢ), où :
- T_{αr} est une transposition paramétrée par le paramètre αᵣ qui permute uniquement deux blocs de bits B1ᵣ et B2ᵣ de la donnée Dᵢ lorsque le paramètre αᵣ est égal à une première valeur et qui ne permute pas ces deux blocs de bits lorsque le paramètre αᵣ est égal à une seconde valeur,
- l'indice r est un identifiant de la transposition T_{αr} et du paramètre αᵣ,
- le symbole "o" désigne l'opération de composition de fonctions,
- "t" est un nombre entier supérieur à un et, typiquement, supérieur à 2^{d-1}, et
- les bits des paramètres α₀ à αₜ forment la clé secrète α.

Ici, la première valeur est la valeur "1" et la seconde valeur est la valeur "0". Les blocs B1ᵣ et B2ᵣ peuvent contenir chacun un ou plusieurs bits.

Il est possible de trouver de nombreuses fonctions F_{α} qui conviennent. Ci-dessous, à titre d'illustration, plusieurs exemples de fonctions F_{α} possibles sont données.

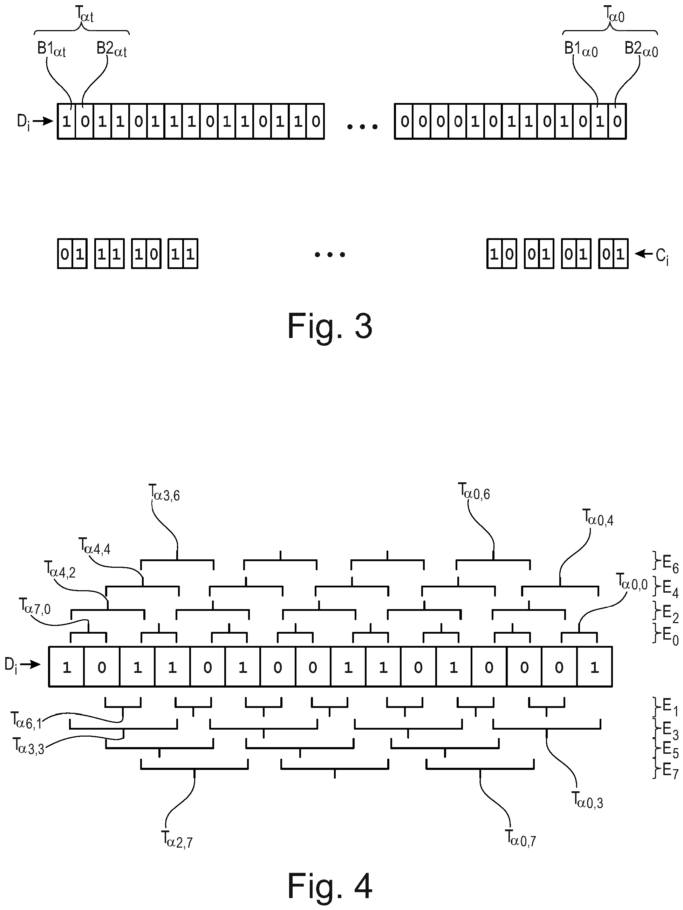

Un premier exemple de fonction F_{α} est décrit en référence à la figure 3. Dans ce premier exemple, les blocs B1ᵣ et B2ᵣ contiennent chacun un seul bit. Dans ce cas, la transposition T_{αr} est, par exemple, réalisée par une porte logique de Fredkin qui, en entrée, reçoit les blocs B1ᵣ et B2ᵣ et le paramètre αᵣ et qui, en sortie, délivre le doublet (B1ᵣ, B2ᵣ) si αᵣ = 0 et délivre (B2ᵣ, B1ᵣ) si αᵣ = 1. De plus, les blocs B1ᵣ et B2ᵣ sont différents des blocs permutés par toutes les autres transpositions de la fonction F_{α}. Ainsi, toutes les transpositions T_{αr} de la fonction F_{α} peuvent être exécutées en parallèle. Ici, les blocs B1ᵣ et B2ᵣ sont des bits consécutifs de la donnée Dᵢ. Le blocs B1ᵣ et B2ᵣ sont classés par ordre croissant de l'indice r sur la figure 3. Sur le figure 3, le symbole "..." indique que seule une partie des bits de la donnée Dᵢ et du code Cᵢ est représentée. Sur cette figure, chaque bit est représenté par sa valeur "0" ou "1". La ligne en-dessous de la donnée Dᵢ représente le code Cᵢ obtenu en appliquant cette fonction F_{α} lorsque tous les paramètres αᵣ sont égaux à "1". Dans ce cas particulier, chaque transposition T_{αr} permute les blocs B1ᵣ et B2ᵣ.

Un deuxième exemple est décrit en référence à la figure 4. Dans ce deuxième exemple, la fonction F_{α} est définie par la relation suivante : F_{α}(Dᵢ) = E₀ o...o E_{q} o ... o E_{NbE-1}(Dᵢ), où chaque fonction E_{q} est un étage de transpositions et q est le numéro d'ordre de cet étage compris entre zéro et NbE-1. NbE est le nombre d'étages de transpositions. NbE est un nombre entier supérieur à un. Dans ce mode de réalisation, NbE est supérieur à d. Ici, sur la figure 4, NbE = 6 et d = 4.

Chaque étage E_{q} de transpositions est défini par la relation suivante : E_{q}(x) = T_{αm,q} o...o T_{αj,q} o ... o T_{α1,q} o T_{α0,q}(x), où :
- x est une variable dont la taille, en nombre de bits, est égale à la taille de la donnée Dᵢ,
- T_{αj,q} est une transposition paramétrée par le paramètre α_{j,q} qui permute deux blocs de bits B1_{j,q} et B2_{j,q} de la variable x lorsque le paramètre α_{j,q} est égal à "1" et qui ne permute pas ces deux blocs de bits lorsque le paramètre α_{j,q} est égal "0",
- "m+1" est le nombre total de transpositions T_{αj,q} de l'étage E_{q},
- "j" est un numéro d'ordre identifiant la position de la transposition T_{αj,q} par rapport aux autres transpositions de l'étage E_{q}.

Dans cet exemple, quel que soit "q" et quel que soit "j", les blocs de bits B1_{j,q} et B2_{j,q} permutés par la transposition T_{αj,q} lorsque le paramètre α_{j,q} est égal à "1", contiennent seulement un bit. Les blocs B1_{j,q} et B2_{j,q} ne sont pas nécessairement consécutifs et peuvent donc être séparés l'un de l'autre par un autre bloc de bits permuté par une autre transposition. Chaque transposition T_{αj,q} se distingue de toutes les autres transpositions de la fonction F_{α} par le fait que c'est la seule qui permute les deux blocs B1_{j,q} et B2_{j,q} lorsque le paramètre α_{j,q} est égal à "1". De plus, les blocs B1_{j,q} et B2_{j,q} de toutes les transpositions T_{αj,q} du même étage E_{q} sont différents les uns des autres et ne se chevauchent pas. Ainsi, toutes les transpositions T_{αj,q} de l'étage E_{q} peuvent être exécutées en parallèles. Par contre, dans cet exemple, les étages E_{q} sont exécutés les uns après les autres dans l'ordre décroissant des indices q.

Pour maximiser l'entropie de la fonction F_{α}, pour chaque étage E_{q}, le nombre m de transpositions est supérieur à 2^{d-2}. De préférence, le nombre m est égal à 2^{d-1}. Sur la figure 4, seule une partie des transpositions T_{αj,q} de chaque étage E_{q} est représentée. Plus précisément, sur la figure 4, une transposition est représentée par une accolade horizontale qui relie les deux bits qu'elle permute.

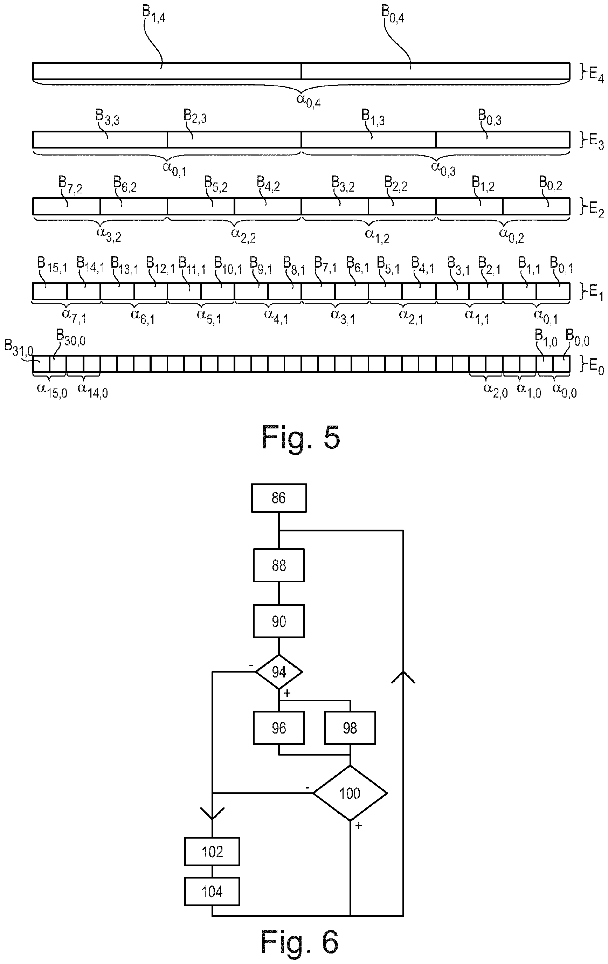

La figure 5 représente un troisième exemple de fonction F_{α}. Dans ce troisième exemple, la fonction F_{α} est aussi définie par la relation suivante : F_{α}(Dᵢ) = E_{NbE-1} o...o E_{q} o ... o E₁ o E₀(Dᵢ), où :
- chaque fonction E_{q} est un étage de transpositions exécutables en parallèle,
- NbE est le nombre d'étages de transpositions, et
- l'indice q est un numéro d'ordre compris entre zéro à NbE-1.

Le nombre NbE est supérieur à un et inférieur ou égale à d. De préférence, le nombre NbE est égal à d. Sur la figure 5, d =5 et NbE = 5.

Comme dans le cas de la figure 4, chaque étage E_{q} de transpositions est défini par la relation suivante : E_{q}(x) = T_{αm,q} o...o T_{αj,q} o ... o T_{α1,q} o T_{α0,q}(x). La définition des différents symboles de l'étage E_{q}(x) n'est donc pas reprise ici.

Chaque étage E_{q}(x) de la figure 5 se distingue de l'étage E_{q}(x) de la figure 4 sur les points suivants :
- les blocs B1_{j,q} et B2_{j,q} permutés par la transpositions T_{αj,q} sont les blocs contigus B_{2j+1,q} et B_{2j,q},
- la taille des blocs B_{2j+1,q} et B2_{j,q} est égal à 2^{q},
- le nombre m de transpositions T_{αj,q} par étage E_{q} est égal à 2^{d-q-1}.

Les notations B_{2j+1,q} et B2_{j,q} indiquent qu'il s'agit, respectivement, du (2j+1)-ième et du 2j-ième blocs de 2^{q} bits de la variable x. Sur la figure 5, le bloc B_{0,q} est le bloc de bits de poids le plus faible, le bloc B_{1,q} le bloc suivant et ainsi de suite. Chaque accolade horizontale sur la figure 5 englobe les deux blocs B_{2j+1,q} et B2_{j,q} d'une transposition T_{αj,q} dont le paramètre est α_{j,q}.

Dans le cas de la figure 5, pour tous les étages E_{q} pour lesquels q est inférieur à NbE-1 et pour toutes les transpositions T_{αj,q} de cet étage, les blocs B_{2j+1,q} et B2_{j,q} sont tous les deux situés à l'intérieur d'un même bloc B_{l,q+1} de l'étage supérieur E_{q+1}, où l'indice "I" désigne le bloc de l'étage supérieur qui contient les blocs B_{2j+1,q} et B_{2j,q}. Par exemple, comme visible sur la figure 5, les blocs B_{1,q} et B_{0,q} de l'étage E_{q} sont systématiquement situés à l'intérieur du bloc B_{0,q+1} de l'étage supérieur E_{q+1}. De plus, ici, chaque bloc d'un étage supérieur E_{q+1} contient au plus deux blocs de l'étage inférieur E_{q}.

Le fonctionnement du microprocesseur 2 pour sécuriser l'exécution des opérations booléennes va maintenant être décrit plus en détail en référence à la figure 6. La fonction F_{α} mise en oeuvre pour faire cela est l'une quelconque des fonctions F_{α} précédemment décrites.

Le procédé débute par la fourniture, lors d'une étape 86, du code binaire 30. Lors de cette étape, dans cet exemple de réalisation, le code binaire 30 est chargé dans la mémoire 4 à partir du support 6. Ensuite, l'exécution du code binaire 30 par le microprocesseur 2 débute.

Lors d'une étape 88, a chaque fois qu'une donnée Dᵢ est enregistrée dans la mémoire cache 27, le module 28 calcule le code Cᵢ à l'aide de la relation Cᵢ = F_{α}(Dᵢ). Ensuite, la donnée Dᵢ et le code Cᵢ qui lui est associé sont tous les deux enregistrés das la mémoire 27.

À chaque fois qu'une instruction de chargement d'une donnée dans l'un des registres Rᵢ est exécutée par l'unité 10, lors d'une étape 90, la donnée Dᵢ et le code Cᵢ sont écrits dans ce registre Rᵢ.

Avant l'exécution d'une opération booléenne entre deux données D₁ et D₂, l'étape 90 est exécutée une fois pour la donnée D₁ et une fois pour la donnée D₂.

Ensuite, à chaque fois qu'une instruction logique est sur le point d'être exécutée par l'unité 10, juste avant son exécution, lors d'une étape 94, le module 28 vérifie s'il existe une erreur dans la donnée Dᵢ contenue dans le registre Rᵢ identifié par un opérande de l'instruction à exécuter.

Lors de cette étape, pour chaque registre Rᵢ concerné, le module 28 vérifie, à l'aide du code Cᵢ contenu dans le registre Rᵢ, si la donnée Dᵢ actuellement enregistrée dans ce registre présente une erreur ou pas. Par exemple, pour cela, le module 28 calcule un code C * à l'aide de la relation Cᵢ* = F_{α}(Dᵢ) et sans utiliser le code Cᵢ enregistré dans le registre Rᵢ. Si le code Cᵢ* ainsi calculé est identique au code Cᵢ enregistré dans le registre Rᵢ, alors l'intégrité et l'authenticité de la donnée Dᵢ sont confirmées. Dans ce cas, le module 28 ne détecte aucune erreur et procède à une étape 96. Dans le cas contraire, le module 28 procède à une étape 102.

Lors de l'étape 102, le module 28 déclenche le signalement d'une faute d'exécution.

Si le module 28 ne détecte aucune erreur, lors de l'étape 96, le microprocesseur 2 décode l'instruction puis l'unité 10 l'exécute et enregistre son résultat Dᵣₑₛ₋ₚ dans le registre Rᵣₑₛ₋ₚ.

Dans le cas où l'instruction exécutée correspond à une opération booléenne, en parallèle de l'étape 96 ou après l'exécution de l'étape 96, lors d'une étape 98, le module 28 calcule le code Cᵣₑₛ₋ₜ en utilisant uniquement les codes Cᵢ associés aux données Dᵢ traitées par l'unité 10 lors de l'étape 96. Ainsi, dans le cas où ce sont les données D₁ et D₂ qui sont traitées, le code Cᵣₑₛ₋ₜ est calculé en combinant les codes C₁ et C₂ enregistrés, respectivement, dans les registres R₁ et R₂ préalablement à l'exécution de l'instruction logique. Plus précisément, le module 28 calcule le code Cᵣₑₛ₋ₜ à l'aide de la relation suivante : Cᵣₑₛ₋ₜ = C₁ & C₂, où le symbole « & » désigne l'opération booléenne exécutée par l'unité 10 lors de l'étape 96.

Ensuite, lors d'une étape 100, le module 28 vérifie si le code Cᵣₑₛ₋ₜ calculé correspond au code Cᵣₑₛ₋ₚ défini par la relation Cᵣₑₛ₋ₚ = F_{α}(Dᵣₑₛ₋ₚ). Ici, pour faire cela, le module 28 calcule le code Cᵣₑₛ₋ₚ à partir du résultat Dᵣₑₛ₋ₚ enregistré dans le registre Rᵣₑₛ₋ₚ et en mettant en oeuvre la relation Cᵣₑₛ₋ₚ = F_{α}(Dᵣₑₛ₋ₚ).

Ensuite, le module 28 compare les codes Cᵣₑₛ₋ₚ et Cᵣₑₛ₋ₜ calculés. Si ces codes sont différents, le module 28 déclenche l'exécution de l'étape 102. Dans le cas contraire, cela veut dire que le code Cᵣₑₛ₋ₜ correspond au code Cᵣₑₛ₋ₚ et donc qu'il n'y a pas eu de faute lors de l'exécution de l'instruction logique par l'unité 10. Dans ce dernier cas, aucun signalement d'une faute d'exécution n'est déclenché et le procédé se poursuit par l'exécution de l'instruction suivante de la file 22.

L'exécution des étapes 98 et 100 permet de détecter un dysfonctionnement de l'unité 10 car les codes calculés Cᵣₑₛ₋ₚ et Cᵣₑₛ₋ₜ sont identiques seulement si l'unité 10 a correctement exécuté l'opération « & ». Ceci s'explique par la relation suivante : Cᵣₑₛ₋ₚ = F_{α}(Dᵣₑₛ₋ₚ) = F_{α}(D₁&D₂) = F_{α}(D₁) & F_{α}(D₂) = C₁ & C₂ = Cᵣₑₛ₋ₜ.

Si l'instruction exécutée lors de l'étape 96 est l'opération de complément de la donnée D₁, lors de l'étape 98, le code Cᵣₑₛ₋ₜ est calculé à l'aide de la relation suivante : Cᵣₑₛ₋ₜ = C₁'. Le reste du procédé est ensuite identique à ce qui a été décrit précédemment. Dans le cas de l'opération de complément, les codes Cᵣₑₛ₋ₚ et Cᵣₑₛ₋ₜ sont identiques uniquement si l'unité 10 a correctement fonctionné. Ceci se démontre à l'aide de la relation suivante : Cᵣₑₛ₋ₚ = F_{α}(Dᵣₑₛ₋ₚ) = F_{α} (D₁⁻) = F_{α}(D₁)'= C₁' =Cres-t.

En réponse à un signalement d'une faute d'exécution, lors d'une étape 104, le microprocesseur 2 met en oeuvre une ou plusieurs contre-mesures. De très nombreuses contre-mesures sont possibles. Les contre-mesures mises en oeuvre peuvent avoir des degrés de sévérité très différents. Par exemple, les contre-mesures mises en oeuvre peuvent aller d'un simple affichage ou une simple mémorisation d'un message d'erreur sans interrompre l'exécution normale du code machine 32 jusqu'à une mise hors service définitive du microprocesseur 2. Le microprocesseur 2 est considéré comme étant hors service lorsqu'il est définitivement placé dans un état où il est incapable d'exécuter un quelconque code machine. Entre ces degrés de sévérité extrêmes, il existe de nombreuses autres contre-mesures possibles telles que :
- l'indication par l'intermédiaire d'une interface homme-machine de la détection des fautes,
- l'interruption immédiate de l'exécution du code machine 32 et/ou sa réinitialisation, et
- la suppression du code machine 32 de la mémoire 4 et/ou la suppression de la copie 40 de sauvegarde et/ou la suppression des données secrètes.

### CHAPITRE IV- VARIANTES :

### Variantes de la fonction Q_{α} :

Dans la relation Q_{α}(Dᵢ) = P o F_{α}(Dᵢ), la fonction P n'est pas nécessairement la fonction identité. Par exemple, la fonction P est une fonction de compression qui construit, à partir de chacun des bits du résultat F_{α}(Dᵢ), un code Cᵢ dont la taille, en nombre de bits, est inférieure à 2^{d}. En effet, lorsque la fonction P est la fonction identité, la taille du code Cᵢ est égale à la taille de la donnée Dᵢ, c'est-à-dire égale à 2^{d}. Or, dans certains contextes, il est souhaitable de diminuer la taille du code Cᵢ. Par exemple, cela est souhaitable pour diminuer la place qu'il peut prendre dans la mémoire cache 27. A titre d'illustration, à cet effet, la fonction P est la fonction qui réalise les opérations suivantes :
1) la fonction P découpe le résultat F_{α}(Dᵢ) en deux blocs p₀ et p₁ de bits de même taille, puis,
2) la fonction P réalise un "OU EXCLUSIF" entre les blocs p₀ et p₁.

Dans ce cas, la taille du code Cᵢ est divisée par deux et égale à 2^{d-1}.

De nombreuses autres fonctions P de compression sont possibles. Par exemple, les opérations 1) et 2) ci-dessus peuvent être réitérées plusieurs fois. Chaque itération divise alors par deux la taille du code Cᵢ.

Dans un autre exemple, lors de l'opération 1), la fonction P découpe le résultat F_{α}(Dᵢ) en g+1 blocs p₀ à p_{g} de même taille et, lors de l'opération 2), la fonction P réalise un "OU EXCLUSIF" entre ces g+1 blocs p₀ à p_{g}. Dans ce cas, la taille du code Cᵢ obtenu est égale à 2^{d-g}. Les bits de chaque bloc p₀ à p_{g} ne sont pas nécessairement des bits adjacents dans le résultat F_{α}(Dᵢ). Ainsi, de façon plus générale, les bits de chaque bloc pₕ sont sélectionnés, parmi les bits du résultat F_{α}(Dᵢ), selon une loi prédéfinie, où l'indice h est l'identifiant du bloc pₕ parmi les blocs p₀ à p_{g}. Par exemple, en variante, l'un des blocs p₀ à p_{g} comporte uniquement des bits de rang pair et un autre des blocs p₀ à p_{g} comporte uniquement des bits de rang impair. Le rang d'un bit désigne la position qu'il occupe dans le résultat F_{α}(Dᵢ), sachant que le bit de poids le plus faible est le bit de rang 0, puis le suivant le bit de rang 1 et ainsi de suite.

La fonction P peut elle aussi être paramétrée par un ou plusieurs paramètres secrets βₕ connus seulement par le module 28 de sécurité. Par exemple, lorsque le paramètre βₕ =0, l'ordre des bits dans le bloc pₕ est laissé inchangé et lorsque le paramètre βₕ =1, l'ordre des bits dans le bloc pₕ est inversé avant de réaliser l'opération 2). De façon plus générale, lorsque le paramètre βₕ =1, les bits du bloc pₕ sont permutés à l'aide d'une permutation prédéfinie et ne sont pas permutés lorsque βₕ =0.

Un autre exemple de fonction P de compression est une fonction de hachage.

La fonction P peut aussi être différente de la fonction identité et d'une fonction de compression. Par exemple, la fonction P est une fonction de chiffrement ou autre.

Par la suite, les différentes variantes sont décrites dans le cas particulier où la fonction P est égale à la fonction identité. Toutefois, ces variantes s'appliquent aussi au cas où la fonction P est différente de la fonction identité.

En variante, la transposition T_{αr} permute les blocs B1ᵣ et B2ᵣ lorsque le paramètre αᵣ = 0 et ne les permute pas lorsque le paramètre αᵣ = 1.

Les blocs B1ᵣ et B2ᵣ permutés par la transposition T_{αr} n'ont pas nécessairement la même taille.

En variante, les transpositions T_{αj,q} d'un même étage sont exécutées les unes après les autres. Dans ce cas, il n'est pas nécessaire que les blocs B1_{j,q} et B2_{j,q} permutés ne se chevauchent pas avec d'autres blocs permutés par d'autres permutations du même étage.

Les tailles des blocs B1_{j,q} et B2_{j,q} permutés par une transpositions T_{αj,q} de l'étage E_{q} peuvent être différentes des tailles des blocs permutés par une autre transposition du même étage E_{q}.

La fonction F_{α} de la figure 5 a été décrite dans le cas particulier où les étages de transpositions transposent d'abord les blocs de plus grande taille et se terminent par la transposition des blocs de plus petite taille. Toutefois, en variante, les étages E_{q} de transpositions peuvent être exécutés et classés dans l'ordre inverse. Dans ce cas, on applique d'abord les transpositions de plus petite taille et on finit par appliquer la transposition T_{α0,NbE-1} de plus grande taille. L'ordre dans lequel sont classés les différents étages E_{q} ne modifie pas la propriété de localité des bits précédemment décrite. Ainsi, même dans le cas où l'ordre des étages E_{q} est inversé, il est possible de construire des circuits de calcul du code Cᵣₑₛ₋ₜ rapides et simples pour la plupart des opérations arithmétiques.

En variante, la taille des blocs B1_{j,q} et B2_{j,q} est plus de deux fois supérieure à la taille des blocs B1_{j,q-1} et B2_{j,q-1} permutés par les transpositions de l'étage inférieur. Par exemple, pour cela, un ou plusieurs étages de la fonction F_{α} décrite en référence à la figure 5 sont omis.

Certaines des transpositions T_{αj,q} peuvent être omises. Dans ce cas, au moins l'un des étages comporte moins de 2^{d-q-1} transpositions T_{αj,q}.

### Autres variantes :

Le module 28 n'est pas nécessairement un module matériel d'un seul bloc. En variante, il est composé de plusieurs sous-modules matériels remplissant chacun l'une des fonctions spécifiques du module 28. Ces sous-modules matériels sont alors de préférence implantés au plus proche des données qu'ils traitent. Par exemple, dans ce cas, le sous-module matériel qui calcul le code Cᵢ associé à chaque donnée Dᵢ est implanté dans la mémoire cache 27. Dès lors, le calcul du code Cᵢ associé à chaque donnée Dᵢ enregistrée dans la mémoire cache 27 est calculé localement dans cette mémoire cache.

En variante, chaque instruction du code machine est aussi associée à un code d'intégrité Q_{α}(Iᵢ) calculé à partir de la valeur de l'instruction Iᵢ chargée. Ce code Q_{α}(Iᵢ) est vérifié juste avant que l'unité 10 exécute l'instruction Iᵢ. Cela permet de déclencher le signalement d'une faute d'exécution si l'instruction Iᵢ est modifiée dans la file 22.

Il est possible d'associer le code Cᵢ à la donnée Dᵢ de différentes manières. Par exemple, au lieu d'enregistrer le code Cᵢ dans le même registre Rᵢ que celui qui contient la donnée Dᵢ, le code Cᵢ est enregistré dans un registre RCᵢ associé au registre Rᵢ et non pas dans le registre Rᵢ.

En variante, chaque donnée Dᵢ est une donnée masquée obtenue en exécutant au préalable une opération de masquage d'une donnée DCᵢ en clair, à l'aide d'un masque M_{D}. Ici, l'opération de masquage est réalisée à l'aide de la relation suivante : Dᵢ = DCᵢ XOR M_{D}. Dans ce cas, le résultat Dᵣₑₛ₋ₚ obtenu est lui aussi masqué à l'aide du masque M_{D}. Le résultat Dᵣₑₛ₋ₚ masqué est obtenu directement en exécutant l'opération booléenne sur les données Dᵢ masquées. Il n'est donc pas nécessaire de démasquer ces données Dᵢ avant d'exécuter l'opération booléenne. Le code Cᵢ, obtenu en appliquant la fonction F_{α} à la donnée Dᵢ masqué, est lui aussi masqué par un masque M_{C}. Le masque M_{C} est égal au masque F_{α}(M_{D}). Cela découle de la relation suivante : F_{α}(Dᵢ)= F_{α}(DCᵢ XOR M_{D}) = F_{α}(DCᵢ) XOR F_{α}(M_{D}) = CCᵢ XOR M_{C}, où CCᵢ est le code Cᵢ en clair. Lorsque la donnée Dᵢ et le code Cᵢ sont masqués, ils peuvent être enregistrées dans une mémoire externe au microprocesseur 2 tout en restant difficile à découvrir.

La clé secrète α peut être modifiée, par exemple, à intervalle régulier.

D'autres modes de réalisation de l'étape 100 sont possibles. Par exemple, au lieu de calculer le code Cᵣₑₛ₋ₚ à partir du résultat Dᵣₑₛ₋ₚ, le module 28 calcule un résultat Dᵣₑₛ₋ₜ à partir du code Cᵣₑₛ₋ₜ. Le résultat Dᵣₑₛ₋ₜ est calculé à l'aide de la relation suivante : Dᵣₑₛ₋ₜ = F_{α}⁻¹(Cᵣₑₛ₋ₜ), où la fonction F_{α}⁻¹ est l'inverse de la fonction F_{α}. Dans ce cas, le code Cᵣₑₛ₋ₜ correspond au code Cᵣₑₛ₋ₚ si le résultat Dᵣₑₛ₋ₜ calculé est identique au résultat Dᵣₑₛ₋ₚ.

### CHAPITRE V-Avantages des modes de réalisation décrits :

Le calcul du code Cᵢ à l'aide d'une clef secrète α rend le procédé d'exécution du code machine plus robuste vis-à-vis des tentatives d'attaque. En effet, l'attaquant peut alors plus difficilement falsifier le code Cᵣₑₛ₋ₜ pour qu'il corresponde à un code attendu, lorsqu'une faute d'exécution a été volontairement introduite. Ainsi, les procédés décrits précédemment présentent les mêmes avantages en termes de robustesse que celui décrit dans l'article de DEMEYER2019. De plus, le fait d'utiliser une fonction F_{α} seulement composée de transpositions conditionnelles permet de calculer le code Cᵣₑₛ₋ₜ simplement à l'aide de la relation Cᵣₑₛ₋ₜ = C₁ & C₂ &... & Cₙ. Le calcul du code Cᵣₑₛ₋ₜ est donc beaucoup plus simple dans le cas des opérations booléennes que lorsque le procédé de l'article DEMEYER2019 est mis en oeuvre.

Le fait de répartir les transpositions T_{αj,q} en étage E_{q} de transpositions exécutables en parallèle, accélère le calcul de chaque code Cᵢ.

Le fait d'utiliser uniquement des transpositions qui permutent des blocs de seulement un bit chacun combiné au fait que les nombres m et NbE sont élevés, maximise l'entropie de la fonction F_{α}. Cela rend donc la fonction F_{α} plus robuste vis-à-vis des tentatives d'attaque car le nombre de valeurs possibles pour le code Cᵢ, calculé à partir de la même donnée Dᵢ et pour toutes les valeurs possibles de la clé α, est très important.

Le fait d'utiliser une fonction F_{α}, telle que celle décrite en référence à la figure 5, permet d'obtenir une fonction qui conserve la localité des bits transposés. Grâce à cela, pour d'autres opérations que les opérations booléennes, il est aussi possible de développer un circuit simple et rapide qui calcule le code Cᵣₑₛ₋ₜ à partir des codes Cᵢ. En fin de compte, cela permet d'accélérer encore plus l'exécution du procédé.

Le fait que la taille des blocs permutés par un étage E_{q} varie de façon monotone en fonction du numéro d'ordre q permet aussi de simplifier la conception des circuits de calcul du code Cᵣₑₛ₋ₜ ou de la donnée Dᵣₑₛ₋ₜ dans le cas où l'instruction exécutée par l'unité 10 réalise une opération arithmétique différente d'une opération booléenne.

Lorsque chaque donnée Dᵢ est le résultat du masquage d'une donnée en clair DCᵢ par un masque M_{D}, le résultat Dᵣₑₛ₋ₚ obtenu après l'exécution de l'opération booléenne est un résultat masqué par ce masque M_{D}. Le masque M_{D} est un masque connu seulement du microprocesseur 2. Le résultat Dᵣₑₛ₋ₚ obtenu peut donc être directement enregistré dans une mémoire externe au microprocesseur, sans que cela puisse révéler des informations sur le fonctionnement de la fonction F_{α}. De façon similaire, le code Cᵣₑₛ₋ₚ est alors lui aussi un code masqué par le masque F_{α}(M_{D}). Dès lors, le code Cᵣₑₛ₋ₚ peut lui aussi être directement enregistré dans une mémoire externe au microprocesseur, sans que cela représente une faille de sécurité. Enfin, il n'est pas nécessaire de démasquer les données à traiter avant l'exécution des opérations booléennes, ce qui simplifie la mise en oeuvre du procédé.

Le fait que chaque transpositions T_{αj,q} soit différente de toutes les autres transpositions de la fonction F_{α} maximise l'entropie de la fonction F_{α} pour un nombre donné de transpositions T_{αj,q}. Ainsi, pour ce nombre donné de transpositions, la fonction F_{α} est la plus robuste possible vis-à-vis des tentatives d'attaques.

La vérification que le code Cᵣₑₛ₋ₜ correspond au code Cᵣₑₛ₋ₚ en le comparant au résultat Q_{α}(Dᵣₑₛ₋ₚ) permet d'utiliser une fonction F_{α} qui ne respecte pas la propriété suivante : F_{α} o F_{α}(x) = x. Cela permet donc un plus grand choix possible pour les fonctions F_{α}. Cela permet aussi d'utiliser une fonction P qui n'est pas inversible.

## Revendications

1. Procédé d'exécution d'un code binaire par un microprocesseur comportant une unité arithmétique et logique, ce procédé comportant :
a) la fourniture (86) du code binaire, ce code binaire contenant :
- une instruction logique comportant un opcode et plusieurs opérandes qui, lorsqu'elle est exécutée par l'unité arithmétique et logique du microprocesseur, provoque la réalisation d'une opération booléenne D₁&D₂&...&Dₙ et l'enregistrement du résultat de cette opération booléenne dans un registre Rᵣₑₛ₋ₚ, où :
- D₁ à Dₙ sont des données enregistrées, respectivement, dans des registres R₁ à Rₙ du microprocesseur,
- les registres R₁ à Rₙ sont les registres désignés par les opérandes de l'instruction logique,
- le symbole « & » est l'opération logique désignée par l'opcode de l'instruction logique, cette opération logique étant choisie dans le groupe des opérations booléennes,
- l'indice n est un entier supérieur ou égal à un,
- pour chaque registre R₁ à Rₙ, une instruction de chargement qui, lorsqu'elle est exécutée par le microprocesseur, provoque le chargement d'une donnée Dᵢ dans le registre Rᵢ, où l'indice i est un identifiant du registre Rᵢ parmi les registres R₁ à Rₙ,
b) lors de l'exécution du code binaire par le microprocesseur, le procédé comporte les opérations suivantes :
1) pour chaque donnée Dᵢ, le calcul (88) d'un code Cᵢ à l'aide d'une relation Cᵢ = Q_{α}(Dᵢ) et l'association du code Cᵢ calculé à la donnée Dᵢ, la fonction Q_{α} étant une fonction préprogrammée paramétrée par une clé secrète α préenregistrée dans le microprocesseur et connue seulement du microprocesseur,
2) à chaque fois qu'une instruction de chargement d'une donnée Dᵢ dans un registre Rᵢ du microprocesseur est exécutée par le microprocesseur, la donnée chargée Dᵢ est enregistrée (90) dans le registre Rᵢ et le code Cᵢ qui lui est associé est enregistré dans le même registre Rᵢ ou dans un registre associé au registre Rᵢ, puis
3) l'exécution (96) par l'unité arithmétique et logique de l'instruction logique contenue dans le code binaire et l'enregistrement du résultat Dᵣₑₛ₋ₚ de cette exécution dans le registre Rᵣₑₛ₋ₚ,
4) en parallèle de l'opération 3) ou ensuite, un module matériel de sécurisation :
- calcule (98) un code Cᵣₑₛ₋ₜ à l'aide des codes C₁, C₂ , ... , Cₙ et sans utiliser le résultat Dᵣₑₛ₋ₚ, puis
- vérifie (100) si le code Cᵣₑₛ₋ₜ calculé correspond à un code Cᵣₑₛ₋ₚ défini par la relation Cᵣₑₛ₋ₚ = Q_{α}(Dᵣₑₛ₋ₚ) et déclenche le signalement (102) d'une faute d'exécution si le code Cᵣₑₛ₋ₜ ne correspond pas au code Cᵣₑₛ₋ₚ et, dans le cas contraire, inhibe ce signalement,
**caractérisé en ce que** :
- la fonction Q_{α} est définie par la relation suivante : Q_{α}(Dᵢ) = P o F_{α}(Dᵢ), où :
- P est une fonction prédéterminée,
- F_{α} est une fonction définie par la relation suivante : F_{α}(Dᵢ)=T_{αt} o...o T_{αr} o ... o T_{α1} o T_{α0}(Dᵢ),
- T_{αr} est une transposition conditionnelle paramétrée par le paramètre αᵣ qui permute deux blocs B1ᵣ et B2ᵣ de bits de la donnée Dᵢ lorsque le paramètre αᵣ est égal à une première valeur et qui ne permute pas ces deux blocs de bits lorsque le paramètre αᵣ est égal à une seconde valeur, les blocs de bits permutés pouvant contenir chacun un ou plusieurs bits,
- le symbole "o" désigne l'opération de composition de fonctions,
- "t" est un nombre entier supérieur à un,
- les bits des paramètres α₀ à αₜ forment la clé secrète α, et
- lors de l'opération 4), le calcul (98) du code Cᵣₑₛ₋ₜ est réalisé à l'aide de la relation suivante : Cᵣₑₛ₋ₜ = C₁ & C₂ & ... &Cₙ.

2. Procédé selon la revendication 1, dans lequel :
- la taille, en nombre de bits, de chacune des données Dᵢ est égale à 2^{d}, où d est un nombre entier supérieur à deux,
- la fonction F_{α} est définie par la relation suivante : F_{α}(Dᵢ) = E₀ o...o E_{q} o ... o E_{NbE-1}(Dᵢ), où chaque fonction E_{q} est un étage de transpositions et q est le numéro d'ordre de cet étage compris entre zéro et NbE-1, où NbE est un nombre entier supérieur à un, chaque étage E_{q} de transpositions étant défini par la relation suivante : E_{q}(x) = T_{αm,q} o...o T_{αj,q} o ... o T_{α1,q} o T_{α0,q}(x), où :
- x est une variable dont la taille, en nombre de bits, est égale à la taille de la donnée Dᵢ,
- T_{αj,q} est une transposition conditionnelle paramétrée par le paramètre α_{j,q} qui permute deux blocs de bits B1_{j,q} et B2_{j,q} de la variable x lorsque le paramètre α_{j,q} est égal à la première valeur et qui ne permute pas ces deux blocs de bits lorsque le paramètre α_{j,q} est égal à la seconde valeur, la transposition T_{αj,q} étant identique à l'une des transpositions T_{αr} précédemment définies, les blocs de bits B1_{j,q} et B2_{j,q} pouvant contenir chacun un ou plusieurs bits, les blocs B1_{j,q} et B2_{j,q} de toutes les transpositions T_{αj,q} de l'étage E_{q} étant différents les uns des autres et ne se chevauchant pas de sorte que toutes les transpositions T_{αj,q} de l'étage E_{q} peuvent être exécutées en parallèles,
- "m+1" est le nombre total de transpositions T_{αj,q} de l'étage E_{q},
- "j" est un numéro d'ordre identifiant la transposition T_{αj,q} parmi les autres transpositions de l'étage E_{q}, et
- lors de l'opération de calcul du code Cᵢ à l'aide de la relation Cᵢ = Q_{α}(Dᵢ), toutes les transpositions T_{αj,q} d'un même étage sont exécutées en parallèle.

3. Procédé selon la revendication 2, dans lequel, :
- la taille de chaque bloc de bits permuté est égal à un bit, et
- le nombre de transpositions T_{αj,q} de chaque étage E_{q} est compris entre 2^{d-2} et 2^{d-1},
- le nombre NbE d'étage E_{q} est supérieur ou égal à d.

4. Procédé selon la revendication 2, dans lequel tous les étages E_{q} pour lesquels q est inférieur à NbE-1 et pour toutes les transpositions T_{αj,q} de cet étage, les blocs B1_{j,q} et B2_{j,q} sont situés à l'intérieur d'un même bloc de taille supérieure permuté par une transposition de l'étage supérieur E_{q+1} lorsque le paramètre de cette transposition de l'étage supérieur E_{q+1} est égal à la première valeur.

5. Procédé selon la revendication 4, dans lequel :
- les tailles des blocs B1_{j,q} et B2_{j,q} de toutes les transpositions T_{αj,q} d'un même étage E_{q} sont égales,
- la taille de chacun des blocs B1_{j,q} et B2_{j,q} est un multiple de deux et varie de façon monotone en fonction du numéro d'ordre q de l'étage E_{q}, et
- pour chaque étage E_{q}, le nombre de transpositions T_{αj,q} dans cet étage est égal à 2^{d-1}/TB_{j,q}, où TB_{j,q} est la taille des blocs B1_{j,q} et B2_{j,q}.

6. Procédé selon l'une quelconque des revendications précédentes, dans lequel la fonction P est une fonction de compression qui construit, à partir de chacun des bits du résultat F_{α}(Dᵢ), un code Cᵢ dont la taille, en nombre de bits, est inférieure à 2^{d}, où 2^{d} est la taille en nombre de bits de la donnée Dᵢ.

7. Procédé selon l'une quelconque des revendications précédentes, dans lequel le procédé comporte l'obtention de chaque donnée Dᵢ par masquage d'une donnée DCᵢ en clair par un masque M_{D}, ce masquage consistant à réaliser un "OU EXCLUSIF" entre la donnée DCᵢ et le masque M_{D}.

8. Procédé selon l'une quelconque des revendications précédentes, dans lequel chaque transposition T_{αr} se distingue de toutes les autres transpositions de la fonction F_{α} par le fait que c'est la seule qui permute les deux blocs B1ᵣ et B2ᵣ lorsque le paramètre αᵣ est égal à la première valeur.

9. Procédé selon l'une quelconque des revendications précédentes, dans lequel la vérification que le code Cᵣₑₛ₋ₜ calculé correspond à un code Cᵣₑₛ₋ₚ comporte :
- le calcul (98) du code Cᵣₑₛ₋ₚ à l'aide de la relation suivante : Cᵣₑₛ₋ₚ = Q_{α}(Dᵣₑₛ₋ₚ), puis
- la comparaison des codes Cᵣₑₛ₋ₜ et Cᵣₑₛ₋ₚ calculés, le code Cᵣₑₛ₋ₜ correspondant au code Cᵣₑₛ₋ₚ seulement si ces deux codes sont identiques.

10. Module matériel (28) de sécurisation pour la mise en oeuvre d'un procédé conforme à l'une quelconque des revendications précédentes, dans lequel le module matériel de sécurisation est configuré pour :
- calculer un code Cᵣₑₛ₋ₜ à l'aide des codes C₁, C₂ , ... , Cₙ et sans utiliser le résultat Dᵣₑₛ₋ₚ, puis
- vérifier si le code Cᵣₑₛ₋ₜ calculé correspond à un code Cᵣₑₛ₋ₚ défini par la relation Cᵣₑₛ₋ₚ = Q_{α}(Dᵣₑₛ₋ₚ) et déclencher le signalement d'une faute d'exécution si le code Cᵣₑₛ₋ₜ ne correspond pas au code Cᵣₑₛ₋ₚ et, dans le cas contraire, inhiber ce signalement,
**caractérisé en ce que** :
- la fonction Q_{α} est définie par la relation suivante : Q_{α}(Dᵢ) = P o F_{α}(Dᵢ), où :
- P est une fonction prédéterminée,
- F_{α} est une fonction définie par la relation suivante : F_{α}(Dᵢ)=T_{αt} o...o T_{αr} o ... o T_{α1} o T_{α0}(Dᵢ),
- T_{αr} est une transposition conditionnelle paramétrée par le paramètre αᵣ qui permute deux blocs B1ᵣ et B2ᵣ de bits de la donnée Dᵢ lorsque le paramètre αᵣ est égal à une première valeur et qui ne permute pas ces deux blocs de bits lorsque le paramètre αᵣ est égal à une seconde valeur, les blocs de bits permutés pouvant contenir chacun un ou plusieurs bits,
- le symbole "o" désigne l'opération de composition de fonctions,
- "t" est un nombre entier supérieur à un, et
- les bits des paramètres α₀ à αₜ forment la clé secrète α, et
- le module matériel de sécurisation est configuré pour calculer le code Cᵣₑₛ₋ₜ à l'aide de la relation suivante : Cᵣₑₛ₋ₜ = C₁ & C₂ & ... &Cₙ.

## Patentansprüche

1. Verfahren zur Ausführung eines binären Codes durch einen Mikroprozessor, der eine arithmetische und logische Einheit aufweist, wobei dieses Verfahren umfasst:
a) die Bereitstellung (86) des binären Codes, wobei dieser binäre Code enthält:
- eine logische Anweisung, die einen Operationscode und mehrere Operanden umfasst und die, wenn sie von der arithmetischen und logischen Einheit des Mikroprozessors ausgeführt wird, die Durchführung einer Booleschen Operation D₁&D₂&...&Dₙ und die Speicherung des Ergebnisses dieser Booleschen Operation in einem Register Rᵣₑₛ₋ₚ bewirkt, wobei:
- D₁ bis Dₙ Daten sind, die jeweils in Registern R₁ bis Rₙ des Mikroprozessors gespeichert sind,
- die Register R₁ bis Rₙ Register sind, die von den Operanden der logischen Anweisung bezeichnet werden,
- das Symbol "&" die logische Operation ist, die vom Operationscode der logischen Anweisung bezeichnet wird, wobei diese logische Operation aus der Gruppe der Booleschen Operationen gewählt ist,
- der Index n eine ganze Zahl größer oder gleich eins ist,
- für jedes Register R₁ bis Rₙ eine Ladeanweisung, wenn sie von dem Mikroprozessor ausgeführt wird, das Laden eines Datenelements Dᵢ in das Register Rᵢ bewirkt, wobei der Index i eine Kennung des Registers Rᵢ unter den Registern R₁ bis Rₙ ist,
b) bei der Ausführung des binären Codes durch den Mikroprozessor umfasst das Verfahren die folgenden Arbeitsschritte:
1) für jedes Datenelement Dᵢ die Berechnung (88) eines Codes Cᵢ mithilfe einer Beziehung Cᵢ = Q_{α}(Dᵢ) und die Zuordnung des berechneten Codes Cᵢ zu dem Datenelement Dᵢ, wobei die Funktion Q_{α} eine vorprogrammierte Funktion ist, die durch einen geheimen Schlüssel α parametriert ist, der im Mikroprozessor vorgespeichert ist und nur dem Mikroprozessor bekannt ist,
2) jedes Mal, wenn eine Anweisung zum Laden eines Datenelements Dᵢ in ein Register Rᵢ des Mikroprozessors von dem Mikroprozessor ausgeführt wird, wird das geladene Datenelement Dᵢ in dem Register Rᵢ gespeichert (90), und der Code Cᵢ, der ihm zugeordnet ist, wird in demselben Register Rᵢ oder in einem dem Register R; zugeordneten Register gespeichert, danach
3) die Ausführung (96), durch die arithmetische und logische Einheit, der in dem binären Code enthaltenen logischen Anweisung und die Speicherung des Ergebnisses Dᵣₑₛ₋ₚ dieser Ausführung im Register Rᵣₑₛ₋ₚ,
4) parallel zum Arbeitsschritt 3) oder danach, durch ein Hardware-Sicherheitsmodul:
- Berechnen (98) eines Codes Cᵣₑₛ₋ₜ mithilfe der Codes C₁, C₂, ... , Cₙ und ohne Verwendung des Ergebnisses Dᵣₑₛ₋ₚ, danach
- Überprüfen (100), ob der berechnete Code Cᵣₑₛ₋ₜ einem durch die Beziehung Cᵣₑₛ₋ₚ = Q_{α}(Dᵣₑₛ₋ₚ) definierten Code Cᵣₑₛ₋ₚ entspricht, und Auslösen der Signalisierung (102) eines Ausführungsfehlers, falls der Code Cᵣₑₛ₋ₜ nicht dem Code Cᵣₑₛ₋ₚ entspricht, und im entgegengesetzten Fall Verhindern dieser Signalisierung,
**dadurch gekennzeichnet, dass**:
- die Funktion Q_{α} durch die folgende Beziehung definiert ist: Q_{α}(Dᵢ) = P o F_{α}(Dᵢ), wobei:
- P eine vorbestimmte Funktion ist,
- F_{α} eine Funktion ist, die durch die folgende Beziehung definiert ist: F_{α}(Dᵢ)=T_{αt} o...o T_{αr} o ... o T_{α1} o T_{α0}(Dᵢ),
- T_{αr} eine durch den Parameter αᵣ parametrierte bedingte Transposition ist, die zwei Blöcke B1ᵣ und B2ᵣ von Bits des Datenelements Dᵢ permutiert, wenn der Parameter αᵣ gleich einem ersten Wert ist, und der diese zwei Blöcke von Bits nicht permutiert, wenn der Parameter αᵣ gleich einem zweiten Wert ist, wobei die permutierten Blöcke von Bits jeweils ein oder mehrere Bits enthalten können,
- das Symbol "o" die Operation der Komposition von Funktionen bezeichnet,
- "t" eine ganze Zahl größer oder gleich eins ist,
- die Bits der Parameter α₀ bis αₜ den geheimen Schlüssel α bilden und
- im Arbeitsschritt 4) die Berechnung (98) des Codes Cᵣₑₛ₋ₜ mithilfe der folgenden Beziehung durchgeführt wird: Cᵣₑₛ₋ₜ = C₁ & C₂ & ... &Cₙ.

2. Verfahren nach Anspruch 1, wobei:
- die Größe, in Anzahl von Bits angegeben, jedes der Datenelemente Dᵢ gleich 2^{d} ist, wobei d eine ganze Zahl größer als zwei ist,
- die Funktion F_{α} durch die folgende Beziehung definiert ist: F_{α}(Dᵢ) = E₀ o...o E_{q} o ... o E_{NbE-1}(Dᵢ), wobei jede Funktion E_{q} eine Stufe von Transpositionen ist und q die Ordnungsnummer dieser Stufe ist, die zwischen null und NbE-1 liegt, wobei NbE eine ganze Zahl größer als eins ist, wobei jede Stufe E_{q} von Transpositionen durch die folgende Beziehung definiert ist: E_{q}(x) = T_{αm,q} o...o T_{αj,q} o ... o T_{α1,q} o T_{α0,q}(x), wobei :
- x eine Variable ist, deren Größe, in Anzahl von Bits angegeben, gleich der Größe des Datenelements Dᵢ ist,
- T_{αj,q} eine durch den Parameter α_{j,q} parametrierte bedingte Transposition ist, die zwei Blöcke von Bits B1_{j,q} und B2_{j,q} der Variablen x permutiert, wenn der Parameter α_{j,q} gleich dem ersten Wert ist, und der diese zwei Blöcke von Bits nicht permutiert, wenn der Parameter α_{j,q} gleich dem zweiten Wert ist, wobei die Transposition T_{αj,q} identisch mit einer der zuvor definierten Transpositionen T_{αr} ist, wobei die Blöcke von Bits B1_{j,q} und B2_{j,q} jeweils ein oder mehrere Bits enthalten können, wobei die Blöcke B1_{j,q} und B2_{j,q} aller Transpositionen T_{αj,q} der Stufe E_{q} voneinander verschieden sind und sind nicht überlappen, so dass alle Transpositionen T_{αj,q} der Stufe E_{q} parallel ausgeführt werden können,
- "m+1" die Gesamtzahl von Transpositionen T_{αj,q} der Stufe E_{q} ist,
- "j" eine Ordnungsnummer ist, welche die Transposition T_{αj,q} unter den anderen Transpositionen der Stufe E_{q} identifiziert, und
- im Arbeitsschritt der Berechnung des Codes Cᵢ mithilfe der Beziehung Cᵢ = Q_{α}(Dᵢ) alle Transpositionen T_{αj,q} derselben Stufe parallel ausgeführt werden.

3. Verfahren nach Anspruch 2, wobei:
- die Größe jedes permutierten Blocks von Bits gleich einem Bit ist, und
- die Anzahl von Transpositionen T_{αj,q} jeder Stufe E_{q} zwischen 2^{d-2} und 2^{d-1} liegt,
- die Anzahl NbE von Stufen E_{q} größer oder gleich d ist.

4. Verfahren nach Anspruch 2, wobei für alle Stufen E_{q}, für die q kleiner als NbE-1 ist, und für alle Transpositionen T_{αj,q} dieser Stufe die Blöcke B1_{j,q} und B2_{j,q} sich im Inneren ein und desselben Blocks von größerer Größe befinden, der durch eine Transposition der höheren Stufe E_{q+1} permutiert wird, wenn der Parameter dieser Transposition der höheren Stufe E_{q+1} gleich dem ersten Wert ist.

5. Verfahren nach Anspruch 4, wobei:
- die Größen der Blöcke B1_{j,q} und B2_{j,q} aller Transpositionen T_{αj,q} derselben Stufe E_{q} gleich sind,
- die Größe jedes der Blöcke B1_{j,q} und B2_{j,q} ein Vielfaches von zwei ist und sich in Abhängigkeit von der Ordnungsnummer q der Stufe E_{q} monoton ändert, und
- für jede Stufe E_{q} die Anzahl der Transpositionen T_{αj,q} in dieser Stufe gleich 2^{d-1}/TB_{j,q} ist, wobei TB_{j,q} die Größe der Blöcke B1_{j,q} und B2_{j,q} ist.

6. Verfahren nach einem der vorhergehenden Ansprüche, wobei die Funktion P eine Kompressionsfunktion ist, die ausgehend von jedem der Bits des Ergebnisses F_{α}(Dᵢ) einen Code Cᵢ erstellt, dessen Größe, in Anzahl von Bits angegeben, kleiner als 2^{d} ist, wobei 2^{d} die Größe, in Anzahl von Bits angegeben, des Datenelements Dᵢ ist.

7. Verfahren nach einem der vorhergehenden Ansprüche, wobei das Verfahren die Gewinnung jedes Datenelements Dᵢ durch Maskierung eines unverschlüsselten Datenelements DCᵢ durch eine Maske M_{D} umfasst, wobei diese Maskierung darin besteht, ein "EXKLUSIVES ODER" zwischen dem Datenelement DCᵢ und der Maske M_{D} auszuführen.

8. Verfahren nach einem der vorhergehenden Ansprüche, wobei jede Transposition T_{αr} sich von allen anderen Transpositionen der Funktion F_{α} dadurch unterscheidet, dass sie die einzige ist, welche die zwei Blöcke B1ᵣ und B2ᵣ permutiert, wenn der Parameter αᵣ gleich dem ersten Wert ist.

9. Verfahren nach einem der vorhergehenden Ansprüche, wobei die Überprüfung, ob der berechnete Code Cᵣₑₛ₋ₜ einem Code Cᵣₑₛ₋ₚ entspricht, umfasst:
- die Berechnung (98) des Codes Cᵣₑₛ₋ₚ mithilfe der folgenden Beziehung: Cᵣₑₛ₋ₚ = Q_{α}(Dᵣₑₛ₋ₚ), danach
- den Vergleich der berechneten Codes Cᵣₑₛ₋ₜ und Cᵣₑₛ₋ₚ, wobei der Code Cᵣₑₛ₋ₜ dem Code Cᵣₑₛ₋ₚ nur dann entspricht, wenn diese beiden Codes identisch sind.

10. Hardware-Sicherheitsmodul (28) zur Durchführung eines Verfahrens gemäß einem der vorhergehenden Ansprüche, wobei das Hardware-Sicherheitsmodul ausgelegt ist zum:
- Berechnen eines Codes Cᵣₑₛ₋ₜ mithilfe der Codes C₁, C₂, ... , Cₙ und ohne Verwendung des Ergebnisses Dᵣₑₛ₋ₚ, danach
- Überprüfen, ob der berechnete Code Cᵣₑₛ₋ₜ einem durch die Beziehung Cᵣₑₛ₋ₚ = Q_{α}(Dᵣₑₛ₋ₚ) definierten Code Cᵣₑₛ₋ₚ entspricht, und Auslösen der Signalisierung eines Ausführungsfehlers, falls der Code Cᵣₑₛ₋ₜ nicht dem Code Cᵣₑₛ₋ₚ entspricht, und im entgegengesetzten Fall Verhindern dieser Signalisierung,
**dadurch gekennzeichnet, dass**:
- die Funktion Q_{α} durch die folgende Beziehung definiert ist: Q_{α}(Dᵢ) = P o F_{α}(Dᵢ), wobei:
- P eine vorbestimmte Funktion ist,
- F_{α} eine Funktion ist, die durch die folgende Beziehung definiert ist: F_{α}(Dᵢ)=T_{αt} o...o T_{αr} o ... o T_{α1} o T_{α0}(Dᵢ),
- T_{αr} eine durch den Parameter αᵣ parametrierte bedingte Transposition ist, die zwei Blöcke B1ᵣ und B2ᵣ von Bits des Datenelements Dᵢ permutiert, wenn der Parameter αᵣ gleich einem ersten Wert ist, und der diese zwei Blöcke von Bits nicht permutiert, wenn der Parameter αᵣ gleich einem zweiten Wert ist, wobei die permutierten Blöcke von Bits jeweils ein oder mehrere Bits enthalten können,
- das Symbol "o" die Operation der Komposition von Funktionen bezeichnet,
- "t" eine ganze Zahl größer oder gleich eins ist, und
- die Bits der Parameter α₀ bis αₜ den geheimen Schlüssel α bilden und
- das Hardware-Sicherheitsmodul dafür ausgelegt ist, den Code Cᵣₑₛ₋ₜ mithilfe der folgenden Beziehung zu berechnen: Cᵣₑₛ₋ₜ = C₁ & C₂ & ... &Cₙ.

## Claims

1. Method for executing a binary code by way of a microprocessor comprising an arithmetic logic unit, this method comprising:
a) providing (86) the binary code, this binary code containing:
- a logic instruction comprising an opcode and a plurality of operands and which, when it is executed by the arithmetic logic unit of the microprocessor, causes a Boolean operation D₁&D₂&...&Dₙ to be carried out and the result of this Boolean operation to be recorded in a register Rᵣₑₛ₋ₚ, where:
- D₁ to Dₙ are data recorded, respectively, in registers R₁ to Rₙ of the microprocessor,
- the registers R₁ to Rₙ are the registers designated by the operands of the logic instruction,
- the symbol "&" is the logic operation designated by the opcode of the logic instruction, this logic operation being chosen from the group of boolean operations,
- the index n is an integer greater than or equal to one,
- for each register R₁ to Rₙ, a loading instruction that, when it is executed by the microprocessor, causes a datum Dᵢ to be loaded into the register Rᵢ, where the index i is an identifier of the register Rᵢ from among the registers R₁ to Rₙ,
b) when the binary code is executed by the microprocessor, the method comprises the following operations:
1) for each datum Dᵢ, computing (88) a code Cᵢ using a relationship Cᵢ = Q_{α}(Dᵢ) and associating the computed code Cᵢ with the datum Dᵢ, the function Q_{α} being a preprogrammed function parameterized by a secret key α pre-recorded in the microprocessor and known only to the microprocessor,
2) each time an instruction to load a datum Dᵢ into a register Rᵢ of the microprocessor is executed by the microprocessor, the loaded datum Dᵢ is recorded (90) in the register Rᵢ and the code Cᵢ associated therewith is recorded in the same register Rᵢ or in a register associated with the register Rᵢ, and then
3) the arithmetic logic unit executing (96) the logic instruction contained in the binary code, and recording the result Dᵣₑₛ₋ₚ of this execution in the register Rᵣₑₛ₋ₚ,
4) in parallel with operation 3) or thereafter, a hardware security module:
- computes (98) a code Cᵣₑₛ₋ₜ using the codes C₁, C₂, ... , Cₙ and without using the result Dᵣₑₛ₋ₚ, and then
- checks (100) whether the computed code Cᵣₑₛ₋ₜ corresponds to a code Cᵣₑₛ₋ₚ defined by the relationship Cᵣₑₛ₋ₚ = Q_{α}(Dᵣₑₛ₋ₚ) and triggers reporting (102) of an execution fault if the code Cᵣₑₛ₋ₜ does not correspond to the code Cᵣₑₛ₋ₚ and, otherwise, inhibits this reporting,
**characterized in that**:
- the function Q_{α} is defined by the following relationship: Q_{α}(Dᵢ) = P o F_{α}(Dᵢ), where:
- P is a predetermined function,
- F_{α} is a function defined by the following relationship: F_{α}(Dᵢ)=T_{αt} o...o T_{αr} o ... o T_{α1} o T_{α0}(Dᵢ),
- T_{αR} is a conditional transposition parameterized by the parameter αᵣ that permutes two blocks B1ᵣ and B2ᵣ of bits of the datum Dᵢ when the parameter αᵣ is equal to a first value and that does not permute these two blocks of bits when the parameter αᵣ is equal to a second value, the permuted blocks of bits each being able to contain one or more bits,
- the symbol "o" designates the function composition operation,
- "t" is an integer greater than one,
- the bits of the parameters α₀ to αₜ form the secret key α, and
- in operation 4), the code Cᵣₑₛ₋ₜ is computed (98) using the following relationship: Cᵣₑₛ₋ₜ = C₁ & C₂ & ... &Cₙ.

2. Method according to Claim 1, wherein:
- the size, in terms of number of bits, of each of the data Dᵢ is equal to 2^{d}, where d is an integer greater than two,
- the function F_{α} is defined by the following relationship: F_{α}(Dᵢ) = E₀ o...o E_{q} o ... o E_{NbE-1}(Dᵢ), where each function E_{q} is a transposition stage and q is the order number of this stage between zero and NbE-1, where NbE is an integer greater than one, each transposition stage E_{q} being defined by the following relationship: E_{q}(x) = T_{αm,q} o...o T_{αj,q} o ... o T_{α1,q} o T_{α0,q}(x), where:
- x is a variable whose size, in terms of number of bits, is equal to the size of the datum D;,
T_{αj,q} is a conditional transposition parameterized by the parameter α_{j,q} that permutes two blocks of bits B1_{j,q} and B2_{j,q} of the variable x when the parameter α_{j,q} is equal to the first value and that does not permute these two blocks of bits when the parameter α_{j,q} is equal to the second value, the transposition T_{αj,q} being identical to one of the previously defined transpositions T_{αr}, the blocks of bits B1_{j,q} and B2_{j,q} each being able to contain one or more bits, the blocks B1_{j,q} and B2_{j,q} of all of the transpositions T_{αj,q} of the stage E_{q} being different from one another and not overlapping, such that all of the transpositions T_{αj,q} of the stage E_{q} are able to be executed in parallel,
- "m+1" is the total number of transpositions T_{αj,q} of the stage E_{q},
- "j" is an order number identifying the transposition T_{αj,q} from among the other transpositions of the stage E_{q}, and
- in the operation of computing the code Cᵢ using the relationship Cᵢ = Q_{α}(Dⱼ), all of the transpositions T_{αj,q} of one and the same stage are executed in parallel.

3. Method according to Claim 2, wherein:
- the size of each permuted block of bits is equal to one bit, and
- the number of transpositions T_{αj,q} of each stage E_{q} is between 2^{d-2} and 2^{d-1},
- the number NbE of the stage E_{q} is greater than or equal to d.

4. Method according to Claim 2, wherein all of the stages E_{q} for which q is less than NbE-1 and for all of the transpositions T_{αj,q} of this stage, the blocks B1_{j,q} and B2_{j,q} are located inside one and the same block of larger size permuted by a transposition of the higher stage E_{q+1} when the parameter of this transposition of the higher stage E_{q+1} is equal to the first value.

5. Method according to Claim 4, wherein:
- the sizes of the blocks B1_{j,q} and B2_{j,q} of all of the transpositions T_{αj,q} of one and the same stage E_{q} are equal,
- the size of each of the blocks B1_{j,q} and B2_{j,q} is a multiple of two and varies monotonically as a function of the order number q of the stage E_{q}, and
- for each stage E_{q}, the number of transpositions T_{αj,q} in this stage is equal to 2^{d-1}/TB_{j,q}, where TB_{j,q} is the size of the blocks B1_{j,q} and B2_{j,q}.

6. Method according to any one of the preceding claims, wherein the function P is a compression function that, from each of the bits of the result F_{α}(Dⱼ), constructs a code Cᵢ whose size, in terms of number of bits, is less than 2^{d}, where 2^{d} is the size of the datum Dᵢ in terms of number of bits.

7. Method according to any one of the preceding claims, wherein the method comprises obtaining each datum Dᵢ by masking an unencrypted datum DCᵢ with a mask M_{D}, this masking consisting in carrying out an "EXCLUSIVE OR" between the datum DCᵢ and the mask M_{D}.

8. Method according to any one of the preceding claims, wherein each transposition T_{αR} differs from all of the other transpositions of the function F_{α} in that it is the only one that permutes the two blocks B1ᵣ and B2ᵣ when the parameter αᵣ is equal to the first value.

9. Method according to any one of the preceding claims, wherein checking that the computed code Cᵣₑₛ₋ₜ corresponds to a code Cᵣₑₛ₋ₚ comprises:
- computing (98) the code Cᵣₑₛ₋ₚ using the following relationship: Cᵣₑₛ₋ₚ = Q_{α}(Dᵣₑₛ₋ₚ), and then
- comparing the computed codes Cᵣₑₛ₋ₜ and Cᵣₑₛ₋ₚ, the code Cᵣₑₛ₋ₜ corresponding to the code Cᵣₑₛ₋ₚ only if these two codes are identical.

10. Hardware security module (28) for implementing a method according to any one of the preceding claims, wherein the hardware security module is configured to:
- compute a code Cᵣₑₛ₋ₜ using the codes C₁, C₂, ... , Cₙ and without using the result Dᵣₑₛ₋ₚ, and then
- check whether the computed code Cᵣₑₛ₋ₜ corresponds to a code Cᵣₑₛ₋ₚ defined by the relationship Cᵣₑₛ₋ₚ = Q_{α}(Dᵣₑₛ₋ₚ) and trigger reporting of an execution fault if the code Cᵣₑₛ₋ₜ does not correspond to the code Cᵣₑₛ₋ₚ and, otherwise, inhibit this reporting, **characterized in that**:
- the function Q_{α} is defined by the following relationship: Q_{α}(Dᵢ) = P o F_{α}(Dᵢ), where:
- P is a predetermined function,
- F_{α} is a function defined by the following relationship: F_{α}(Dᵢ)=T_{αt} o...o T_{αr} o...o T_{α1} o T_{α0}(Dᵢ),
- T_{αR} is a conditional transposition parameterized by the parameter αᵣ that permutes two blocks B1ᵣ and B2ᵣ of bits of the datum Dᵢ when the parameter αᵣ is equal to a first value and that does not permute these two blocks of bits when the parameter αᵣ is equal to a second value, the permuted blocks of bits each being able to contain one or more bits,
- the symbol "o" designates the function composition operation,
- "t" is an integer greater than one, and
- the bits of the parameters α₀ to αₜ form the secret key α, and
- the hardware security module is configured to compute the code Cᵣₑₛ₋ₜ using the following relationship: Cᵣₑₛ₋ₜ = C₁ & C₂& ... &Cₙ.
